## Europäisches Patentamt

## European Patent Office

## Office européen des brevets

(11) Publication number: **0 026 646**
**B1**

(12) **EUROPEAN PATENT SPECIFICATION**

(45) Date of publication of patent specification: **27.08.86**

(51) Int. Cl.⁴: **H 05 B 7/14**

(21) Application number: **80303383.6**

(22) Date of filing: **26.09.80**

(54) **Graphite electrode column joints and pins for forming them.**

(30) Priority: **28.09.79 US 79887**

(43) Date of publication of application:
**08.04.81 Bulletin 81/14**

(45) Publication of the grant of the patent:
**27.08.86 Bulletin 86/35**

(84) Designated Contracting States:
**DE FR GB IT**

(56) References cited:
**DE-A-1 565 487**
**DE-C- 901 221**
**FR-A-2 324 189**
**GB-A- 670 162**
**US-A-3 569 609**
**US-A-4 161 619**

(73) Proprietor: **UNION CARBIDE CORPORATION**
**39 Old Ridgebury Road**
**Danbury Connecticut 06817 (US)**

(72) Inventor: **Weng, Tu-lung**
**1597 English Drive**
**San Jose California (US)**
Inventor: **Seldin, Emanuel Judah**
**16384 Barriemore Avenue**
**Middleburg Heights Ohio (US)**

(74) Representative: **Ranson, Arthur Terence et al**
**W.P. Thompson & Co. Coopers Building Church**
**Street**
**Liverpool L1 3AB (GB)**

Courier Press, Leamington Spa, England.

# 0 026 646

**Description**

The present invention relates to graphite electrode column joints and to connecting pins for forming them.

Graphite electrodes of the type used in steel furnaces are made in diameters of from 10.2 cm (4 inches) up to as large as 71.0 cm (28 inches). They are commonly made and shipped in uniform lengths and then joined together at the place of use. This joining of electrode sections is commonly accomplished using threaded connecting pins which are screwed into threaded holes or sockets in the electrode ends. Originally these connecting pins were cylindrical with straight threads. Many years ago, however, it was discovered that a tapered threaded pin was faster to use and gave a stronger joint than an equivalent straight pin.

At the time the tapered joint was adopted by electrode manufacturers a taper of 33.3 cm of diameter per metre (4 inches per foot) of pin length was selected. This was apparently done because it was the steepest taper which could be conveniently made on the equipment then available and because no advantage was seen for a greater taper. This taper of 33.3 cm of diameter per metre of pin length, which is a taper of 9.46° from the centreline of the pin, has become the standard for the industry as set out in Standards Publication No. CG 1—1970 published by the National Electrical Manufacturers Association of 155 East 44nd Street, New York, United States of America, and is used in all pin connected graphite electrodes produced commercially today. This Standards Publication also sets out details of the taper threads. Such a joint is also shown in US—A—G 161 619.

In addition to the function consumption of graphite electrodes in steel furnaces there are breakage losses and intensified surface oxidation losses in the joint regions. The breakage losses are due to external mechanical loads, such as bending moments caused by shifting steep scrap striking the bottom of the electrode column. These bending moments can cause breakage at the highest joint in the column below the electrode holder. Losses at the surface of the electrodes due to oxidation are more severe in the joint region where the joint electrical resistance causes the electrode surface temperature to increase.

German Patent Specification No. 901,221 sets out a problem which had hitherto arisen with a joint between electrode sections made by forming a conical threaded hole or socket in the end of one electrode section and forming the end portion of the other electrode section into a conical threaded spigot which is screwed into the hole or socket. On the assumption that current transfer between the electrode sections takes place not only between the threaded portions but also through confronting surfaces of the electrode sections, a jointing cement was placed between the electrodes but it had been found in practice that under the conditions of operation the cement between the abutting surfaces was oxidised so that current transfer would then only take place through the threaded spigot and socket portions of which the maximum cross sectional area was only 42% of the total cross sectional area of the electrode sections. As a result the threaded spigot in particular became overheated and finally resulted in breakage and failure. As a remedy it was proposed to enlarge the maximum diameter of the conical threaded portion of the spigot towards the periphery of the electrode section as far as possible compatible with the wall of the socket having sufficient strength adjacent its open end. The cross section at the base of the spigot was to be taken as the controlling quantity for determining the current transfer, so that all current transfer took place through the spigot and there was no requirement for transverse surface to surface contact for current transfer so that the resultant joint was an open face joint. With an enlargement of the base of the threaded spigot, but with retention of the same axial length thereof, a consequential result was an increased angle of taper from a hitherto value of 70° to about 55 to 60°.

It is an object of the present invention to improve the mechanical strength and resistance to breakage from bending of electrode columns employing connecting pins taper threaded at both ends to join electrode sections. A further object of the invention is to provide joints of this type with lowered electrical resistance.

It has now been discovered that these objectives can be achieved and an electrode joint of increased strength and lower resistance can be made by using a tapered connecting pin with a taper angle substantially greater than that which has been considered standard up until now. We have found that a pin taper angle between about 15° and about 35° works well, with 20° to 30° preferred.

According to one feature of the present invention a graphite electrode column joint comprising two graphite electrode section ends each having an axial tapered end socket, and a double ended tapered connecting pin having a complementary tapered thread screwed into the opposing end sockets to bring the end faces of the graphite electrode sections into contact with one another whilst leaving each end face of the pin and the bottom of the respective socket spaced apart, the thread of the sockets and pin having a conventional profile with flat faces and an included angle of 60°, the faces symmetrically making an angle of 30° relative to a line passing through the apex of a thread perpendicular to the pin centre line, is characterized in that the angle of the taper from the centreline of the pin is between 15° and 35° inclusive.

According to another feature of the present invention a double ended taper threaded connecting pin adapted for joining two graphite electrode sections whose opposing ends have axial tapered threaded sockets, the length of each tapered end of the pin being less than the axial depth of the tapered socket in the electrode section to which it is to be fitted so that it can be screwed into respective electrode sockets so as to leave each of its end faces and the bottom of the respective socket spaced apart and thereby bring

2

opposing end faces of the electrode sections into contact with one another, the threads of the sockets and pin being complementary and having a conventional profile with flat faces and an included angle of 60°, the faces symmetrically making an angle of 30° relatively to a line passing through the apex of a thread perpendicular to the pin centre line, is characterized in that the angle of the taper from the centreline of the pin is between 15° and 35° inclusive.

The invention will be further described with reference to the accompanying drawings which illustrate the apparatus used in the examples to demonstrate the improvement in electrode joint properties using the wider taper angle according to the invention, and in which:

Figure 1 illustrates a two-dimensional model of a central section of a plastics electrode joint being subjected to tension and bending forces prior to being photographed under polarized light,

Figure 2 illustrates a three-dimensional plastics model of an electrode joint being subjected to tension and bending forces while in an over prior to being sliced for samples to be examined under polarized light,

Figure 3 illustrates an electrical test device for measuring resistance across an electrode joint, and

Figure 4 illustrates a test machine set-up for measuring the flexural force necessary to break an electrode joint.

The improved strength of joints according to the invention was demonstrated using plastics models and photoelasticity tests. The techniques of photoelasticity are well established in the field of experimental stress analysis. Utilizing the principles of photoelasticity, an extensive experimental study was made of both two-dimensional and three-dimensional models of electrode joints subjected to tensile and bending loads in order to study the effects of the geometric parameters of the joint on the location and magnitude of the peak stresses in the joints. In the photoelastic method, a two-dimensional plastics model of uniform thickness which is under stress, or a slice of three-dimensional plastics model which had previously been subjected to stress while it was heated, is viewed in a polariscope, where it is placed between crossed sheets of polarized material. The stresses in the model, when viewed in the polarized light of the polariscope, give rise to an interference pattern, usually called a fringe pattern. In analyzing the fringe pattern, a number can be assigned to each fringe, and it is possible to assign a fringe value to any point on the model, usually to within ± 0.02 fringe. According to photoelastic theory, the fringe value at any point is directly proportional to the difference in the principal stresses at that point. At those points in our models where the stresses were highest, which were always at an edge of the model, the principal stress normal to the model edge was zero so that the fringe values were directly proportional to the stresses. Therefore, in some of our experiments, it was possible to give relative values of stress in terms of fringe values. In our experiments, stresses were measured in two-dimensional models while they were under load; and stresses were measured in three-dimensional models after they were subjected to loads by utilizing the stress-freezing technique. These experiments are described below in Examples I and II.

## Example I

Experiments were performed with three different two-dimensional plastics models of joints in which the only variable was the taper angle. The two electrode parts of the models, made of 0.32 cm (1/8 inch) thick polyester plastics, (PSM—1, manufactured by Photolastic, Inc. of Malvern, PA.) were 10.16 cm (four inches) wide and 16.5 cm (6.5 inches long). The connecting pins, made of the same plastics, had major diameters of 7.37 cm (2.9 inches) and lengths of 9.14 cm (3.6 inches). There were 1.57 threads per cm (four threads per inch) as measured parallel to the electrode axis, and the threads all were of a conventional design, with flat faces and an included angle of 60°; the threads were also conventionally symmetric, with the faces making an angle of 30° relative to a line passing through the apex of the thread perpendicular to the electrode axis. The three models had taper angles of 9.46°, 20° and 30°.

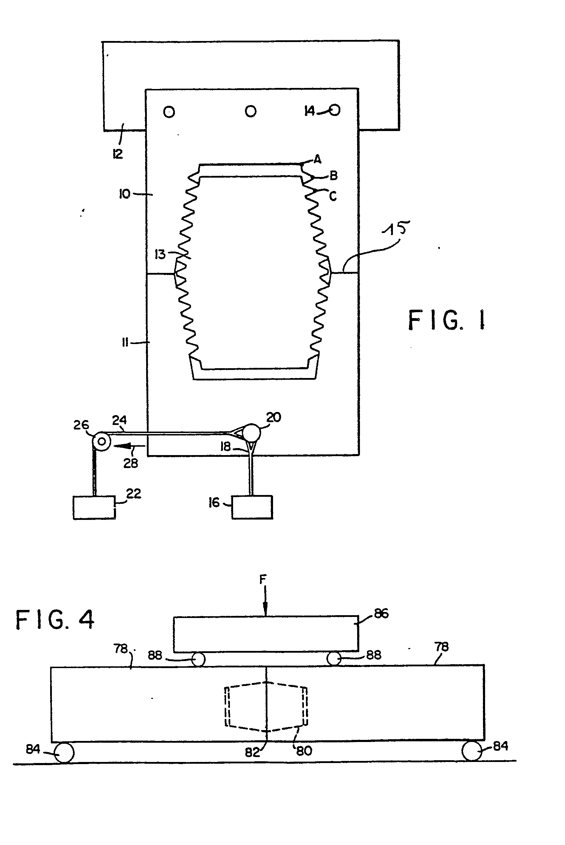

As shown in Figure 1 the top electrode end 10 of the model was fixed in a support 12 by pins 14 and for the tension tests only a load 16 was suspended by strings 18 from a rod 20 passed through a hole in the bottom electrode end 11 of the model. The top end 10 of the model was connected to the bottom end 11 of the model by the connecting pin 13 of the model and the two ends of the model touched each other at the end faces 15 when no tension load 16 was applied. The load 16 amounted to 7.17 kg (15.8 pounds). The bending test involved using only a load 22 suspended by strings 24 over a pulley 26 from the rod 20. This arrangement exerted a bend force on the electrode end 11 of the model in the direction of the arrow 28. The bending load 22 was 1.70 kg (3.75 pounds). In both tests the weight loaded models were observed under polarized light and measurements of fringe value were made at three locations in the top electrode where the stress was greatest: (1) at the base of the socket (point A of Figure 1), (2) at the unengaged thread of the socket (point B of Figure 1), and (3) at the first active thread of the socket (point C of Figure 1). The fringe values always decreased in going to successive active threads. Table I lists the fringe values and the stresses they represent at the three locations in each model. It can be seen that the stress is highest at the first active thread, next highest at the unengaged thread, and third highest at the base of the socket. The numbers clearly show that the maximum fringe value (maximum stress) for both tension and bending loads decreases as the taper angle increases.

# 0 026 646

TABLE I

| Test No. | Taper Angle | Base of Socket F.V.* | Stress** | Unengaged Thread F.V.* | Stress** | First Active Thread F.V.* | Stress** |
|---|---|---|---|---|---|---|---|
| 1 | 9.46 | 2.5 | $5.516 \times 10^6$ Pa | 3.3 | $7.308 \times 10^6$ Pa | 3.6 | $7.929 \times 10^6$ Pa |
| 2 | 20° | 1.4 | $3.103 \times 10^6$ Pa | 2.3 | $5.102 \times 10^6$ Pa | 2.5 | $5.516 \times 10^6$ Pa |
| 3 | 30° | 1.0 | $2.206 \times 10^6$ Pa | 1.6 | $3.516 \times 10^6$ Pa | 2.2 | $4.827 \times 10^6$ Pa |
| 4 | 9.46 | 1.1 | $2.413 \times 10^6$ Pa | 1.6 | $3.516 \times 10^6$ Pa | 2.0 | $4.413 \times 10^6$ Pa |
| 5 | 20° | 0.4 | $0.827 \times 10^6$ Pa | 1.1 | $2.413 \times 10^6$ Pa | 1.4 | $3.103 \times 10^6$ Pa |
| 6 | 30° | 0.5 | $1.103 \times 10^6$ Pa | 0.6 | $1.310 \times 10^6$ Pa | 1.0 | $2.206 \times 10^6$ pa |

*Fringe Value
**Stress in Pascals

Tests 1, 2 and 3 were in tension
Tests 4, 5 and 6 were with a bending force

Example II

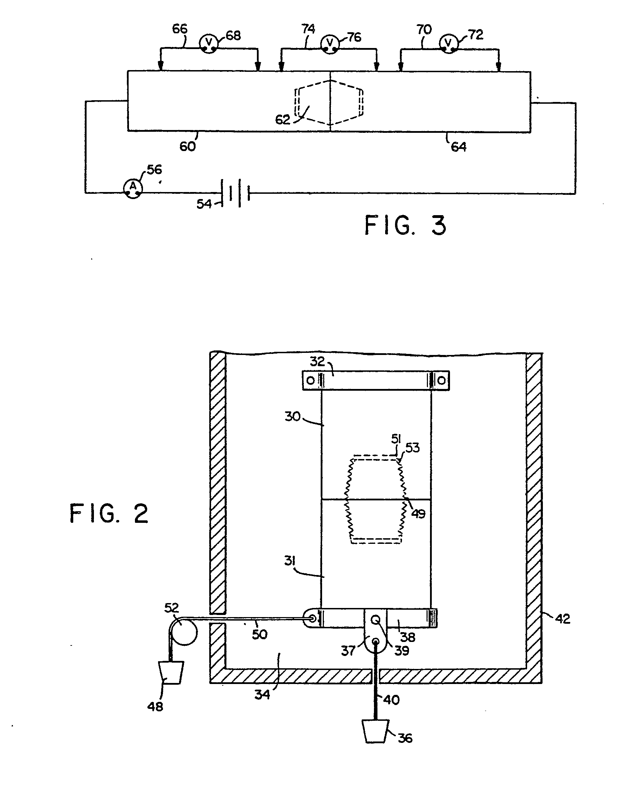

In these experiments three dimensional cast epoxy resin one-sixth scale models of the 61 cm (24 inch) diameter electrode joints comprising different size pins and different thread tapers were subjected to tension and to bending loads while in an oven. The epoxy resins PLM—4B were manufactured by Photolastic, Inc. of Malvern, Pa. The test apparatus is shown in Figure 2. The top electrode section 30 and the bottom electrode section 31 were each 10.16 cm (4 inches) in diameter and 17.8 cm (7 inches) long. The top electrode section 30 of the three dimensional scale model electrode joint was supported by a clamp 32 inside an oven 34.

In the tension tests employing the stress-freezing technique a load 36 was suspended from tension load clamp 37 by a rod 40 passing through oven wall 42. The tension load clamp 37 was attached to the bottom electrode section 31 by steel pin 39. The combined weight of the tension load clamp 37, steel pin 39, rod 40 and load 36 was 3.97 kg (8.75 pounds). The oven was then heated to a temperature of 121°C (250°F) at which temperature the epoxy resin was relatively soft, and was then cooled at a slow rate of approximately 0.55°C (1°F) per hour back to room temperature. Once cooled, the entire electrode joint, consisting of top electrode section 30, bottom electrode section 31 and connecting pin 44, was removed from the oven and without disassembly two vertical cuts were made through the model to obtain a 0.51 cm (0.2 inch) thick slice encompassing the central axis of the model. The polished slices were examined in a polariscope and the fringe patterns were observed and measured.

For the bending tests the tension load clamp 37 was not employed. Instead a bending load clamp 38 was secured around the bottom of the bottom electrode section 31. A load 48 of 2.78 kg (6.12 pounds) was attached to bending load clamp by wire 50 running through oven wall 42 and over pulley 52. The oven was heated and cooled as in the tension tests and 0.51 cm (0.2 inch) thick slices of the model were taken as before. The centre of each slice was the radial plane of the model which included the vector of the bending movement exerted by wire 50. The polished slices were examined in a polariscope and the fringe patterns were observed and measured.

Table II shows the results obtained with three dimensional models of four types of joints. Both tensile and bending loads were used in order to determine by simple subtraction of the effect of the tensile load due to the weight of the model material, the stresses due to bending only. The stress δ at every point of high stress concentration in the electrode is proportional to the bending moment M at that point, where M is the product of the applied load and the distance from the point to the line of action of the applied load. In the fourth column of Table II, the ratio δ/M is given for each model at three points of high stress concentration: (1) the location called "Pin" is a point 49 in the centre of the slice on the major diameter of the pin, (2) the location called "Base of Socket" is a point 51 in the centre of the slice at the inner surface of the electrode socket where the diameter is a minimum and (3) the location called "First Active Thread" is a point 53 in the centre of the slice at that thread in the electrode socket which is in contact with the first thread at the end of the connecting pin.

Since the ratio δ/M is the stress per applied bending moment, the value of δ/M can serve as an indicator of failure of the joint. If the electrode material and pin material have the same strength, failure will most likely take place at the location where δ/M is greatest. However, electrode material and pin material usually have different strengths. Assuming that the ratio of pin strength to electrode strength is 1.6 which is based on typical strength values, there has been calculated for the pin an "Adjusted δ/M" which is the value

4

of δ/M in the fourth column divided by 1.6; these values of adjusted δ/M, along with the unchanged values of δ/M for the electrode, are shown in the fifth column of Table II. There is then shown, in the last column of Table II, the relative order of joint failure of the four joints and the location of the failure crack; the criterion used to predict joint breakage is that a failure crack will most likely initiate where the adjusted δ/M value is highest.

Of the four joints, the first joint to fail would be the one with the smaller (31.75 × 35.56 cm) (12 1/2 × 14 inches) connecting pin and the conventional 9.46° taper angle, and failure would occur at the first active thread in the electrode socket. The second joint to fail would be the one with the larger (34.29 × 45.72 cm) (13 1/2 × 18 inches) connecting pin and the 9.46° taper angle, and failure would also occur at the first active thread in the electrode socket. The third and fourth joints to fail would be the ones with the smaller and larger connecting pins with the 20° taper angle and these joints would fail through the pin.

Table II indicates that increasing the taper angle leads to greatly reduced stress in the electrode socket and slightly increased stress at the centre of the pin, the net effect being to increase the strength of the joint. The best way to practice the invention is to adjust the length and diameter of the connecting pin and the taper angle, taking account of the relative actual strengths of the electrode and pin materials, in such a way that the joint will fail with equal probability (the same value of adjusted δ/M) in the pin and at the first active thread of the electrode socket. For example, the data in Table II indicate that the strongest joint is the one with the longer connecting pin and the 20° taper angle; in comparing the values of adjusted δ/M for the two joints with longer connecting pins, it would seem that a joint utilizing a taper angle of about 15° would probably have an adjusted δ/M of approximately $17.3 \times 10^3$ Pa/J (3.4 p.s.i./ft.lb) at both the pin and first active thread and would, therefore, be just slightly stronger than the joint with the 20° taper angle. For practical reasons, however, a user will prefer a joint which will preferentially break through the pin rather than through the electrode because he can then salvage and reuse the electrode while replacing only the pin. Therefore, after ascertaining the optimum design for the joint by the above procedure, it may be desirable to reduce the pin diameter or length slightly or increase the taper angle slightly to weigh the probability of failure more toward the pin.

TABLE II

| Connecting Pin* | Taper | Location of stress Concentration | δ/M for Model (Pa × 10³) ——— J | Adjusted δ/M | Relative Order of Joint Failure |
|---|---|---|---|---|---|
| 31.75 × 35.56 cm | 9.46° | Pin | 29.5 | 18.3 | |
| | | Socket Base | 11.2 | 11.2 | |
| | | First Active Thread | 33.1 | 33.1 | 1 |
| 31.75 × 35.56 cm | 20° | Pin | 33.6 | 20.8 | 3 |
| | | Socket Base | 12.7 | 12.7 | |
| | | First Active Thread | 14.7 | 14.7 | |
| 34.29 × 45.72 cm | 9.46° | Pin | 25.4 | 16.3 | |
| | | Socket Base | 11.7 | 11.7 | |
| | | First Active Thread | 22.4 | 22.4 | 2 |
| 34.29 × 45.72 cm | 20° | Pin | 28.5 | 17.8 | 4 |
| | | Socket Base | 10.7 | 10.7 | |
| | | First Active Thread | 12.2 | 12.2 | |

\* Dimensions (maximum diameter × length) in cm for full size 61 cm diameter electrodes, of which these are 1/6 scale models.

Example III

Measurements of joint electrical resistance with connecting pins of varying taper were made with 20,32 cm (eight inch) diameter electrodes joined with 12.2 cm (4 13/16 inch) maximum diameter by 17.78 cm (7 inch) long connecting pins. The joints were tightened with a torque wrench to a torque of 190 Joules. As shown in Figure 3 a current from battery 54 measured by ammeter 56 was passed through joint 58 which consisted of a first electrode 60, connecting pin 62 and second electrode 64. Resistance measurements were made in the solid first electrode 60 using probe 66 and voltmeter 68 and in the second electrode 64 using probe 70 and voltmeter 72, and the two measurements were averaged for each electrode joint combination. The ends of the probes 66 and 70 were each set 35.56 cm (14 inches) apart along the lengths of the two connected electrodes 60 and 64, and with the resistance determined using probe 74 and voltmeter 76 representing the total resistance of the length of electrodes involved 17.78 cm (7 inches of each electrode) is well as the added resistance of the joint itself.

Subtracting the average resistance of electrodes 60 and 64 from the total resistance across the joint gives the actual resistance added by the joint itself. In table III are listed for each joint of varying taper angle the average solid resistance of the joint itself. Table III clearly shows that the joint electrical resistance decreased as the taper angle increased.

## TABLE III

| Joint No. | Taper Angle | $(10^{-3})$ Ohms Solid Electrode Average | Joint Total | Resistance Joint Alone |
|---|---|---|---|---|
| 1 | 9.46 | 0.113 | 0.134 | 0.021 |
| 2 | 9.46 | 0.110 | 0.140 | 0.030 |
| 3 | 15 | 0.103 | 0.119 | 0.016 |
| 4 | 15 | 0.127 | 0.143 | 0.016 |
| 5 | 20 | 0.106 | 0.117 | 0.011 |
| 6 | 20 | 0.107 | 0.120 | 0.013 |

## Example IV

Flexural tests to determine joint strength were made on joints with connecting pins of varying taper. The electrodes were 20.3 cm (eight inch) diameter graphite stock and the connecting pins were 12.22 cm (4 13/16 inches) in maximum diameter by 17.78 cm (7 inches) long. The joints were tightened with a torque wrench to a torque of 190 Joules (140 foot pounds). The test apparatus, a Baldwin Universal Testing Machine is shown schematically in Figure 4. The electrode sections 78 joined by connecting pin 80 at joint 82 were supported on supports 84 spaced 137.2 cm (54 inches) apart, the joint 82 being centered between the supports 84. Force F was applied to the joint through a steel distributor 86 resting on steel rods 88 spaced 45.7 cm (18 inches) apart and equidistant from the joint. Using this apparatus a breaking force $F_j$ for joints with connecting pins of varying taper was determined by increasing the force F until the joint broke in flexure. The same apparatus was used to apply force to solid standard electrodes of the same size made from the same stock to determine the force $F_s$ necessary to break the solid standard electrode without a joint.

In order to take account of the variation in strength of the different electrodes, the flexural strength $\delta j$ of the electrode sections used in the joint strength test was determined for six test bars taken from these electrodes. These bars were 2.54 cm (one inch) square by 15.24 cm (six inches) long with the lengths of the bars parallel to the electrode central axis and were tested on the Baldwin Universal Testing Machine using a set-up similar to that shown in Figure 4. The distance between the supports for the test bar was 12.7 cm (five inches) while the distance between the load bars on top of the test bar was 4.24 cm (1.67 inches). Similarly, the flexural strength $\delta s$ was determined for bars cut from the solid standard electrodes which were used for the determination of breaking force $F_s$.

The values for breaking force $F_j$ and for flexural $\delta_j$ of the electrode stock used for each joint for various tapers are shown in Table IV.

In order to account for the variation in strength of the electrode stock material, and to thereby normalize the test data a joint strength efficiency has been defined by the formula:

$$\text{Joint Strength Efficiency} = \frac{F_j}{\delta_j} \times \frac{\delta_s}{F_s} \times 100\%$$

The value of $234m^{-2}$ (0.151 in. $^{-2}$) for $\delta_s/F_s$ was obtained from the average value of $\delta_s$ measured for the solid electrode sections and from the average value of $F_s$ for the bars taken from these solid electrode sections. The joint strength efficiency is therefore a dimensionless number, expressed as a percentage, which is proportional to the strength of the joint. A joint strength efficiency of 100% (unattainable) would indicate a joint which is as strong as a solid electrode. As can be seen in Table IV the joint strength efficiency increased as the taper angle was increased.

TABLE IV

| Joint No. | Taper Angle Degrees | Joint Breaking Force $F_j$ (Newtons) | Flexural Strength of Test bars $\delta_j$ (Pascals) | Joint Strength Efficiency |
|---|---|---|---|---|
| 1 | 9.46 | $15.83 \times 10^3$ | $10.00 \times 10^6$ | 37.1 |
| 2 | 9.46 | $12.32 \times 10^3$ | $8.69 \times 10^6$ | 33.2 |
| 3 | 15 | $16.05 \times 10^3$ | $8.27 \times 10^6$ | 45.5 |
| 4 | 15 | $15.79 \times 10^3$ | $9.52 \times 10^6$ | 38.9 |
| 5 | 20 | $17.70 \times 10^3$ | $7.17 \times 10^6$ | 57.9 |
| 6 | 20 | $16.37 \times 10^3$ | $9.38 \times 10^6$ | 40.9 |

**Claims**

1. A graphite electrode column joint comprising two opposing graphite electrode section ends each having an axial tapered threaded end socket, and a double ended tapered connecting pin having a complementary tapered thread screwed into the opposing end sockets to bring the end faces of the graphite electrode sections into contact with one another whilst leaving each end face of the pin and the bottom of the respective socket spaced apart, the threads of the sockets and pin having a conventional profile with flat faces and an included angle of 60°, the faces symmetrically making an angle of 30° relative to a line passing through the apex of a thread perpendicular to the pin centre line, characterised in that the angle of the taper from the centre line of the pin is between 15° and 35° inclusive.

2. A graphite electrode column joint according to claim 1, characterised in that said angle is between 20° and 30° inclusive.

3. A graphite electrode column joint according to claim 1, chaaracterised in that said angle is substantially 20°.

4. A graphite electrode column joint according to claim 1, characterised in that said angle is substantially 30°.

5. A double ended taper threaded connecting pin adapted for joining two graphite electrode sections whose opposing ends have axial tapered threaded sockets, the length of each tapered end of the pin being less than the axial depth of the tapered socket in the electrode section to which it is to be fitted so that it can be screwed into respective electrode sockets so as to leave each of its ends and the bottom of the respective socket spaced apart and thereby bring opposing end faces of the electrode sections into contact with one another, the threads of the sockets and pin being complementary and having a conventional profile with flat faces and an included angle of 60°, the faces symmetrically making an angle of 30° relatively to a line passing through the apex of a thread perpendicular to the pin centre line, characterised in that the angle of the taper from the centre line of the pin is between 15° and 35° inclusive.

6. A connecting pin according to claim 5, characterised in that said angle is between 20° and 30° inclusive.

7. A connecting pin according to claim 5, characterised in that said angle is substantially 20°.

8. A connecting pin according to claim 5, characterised in that said angle is substantially 30°.

**Patentansprüche**

1. Graphitelektrodenschaftverbindung aus zwei sich gegenüberliegenden Enden von Graphitelektrodenabschnitten, von denen jedes eine axiale, mit konischem Gewinde versehene, stirnseitige Fassung aufweist, und aus einem doppelseitig konischen Verbindungsnippel mit entsprechend konischem Gewinde, mit dem dieser in die gegenüberliegenden stirnseitigen Fassungen eingeschraubt ist, um die

**0 026 646**

Stirnflächan der Graphitelektrodenabschnitte in Anlage miteinander zu bringen, während jede der Stirnflächen des Nippels und der Boden der zugehörigen Fassung in einem Abstand voneinander verbleiben, wobei die Gewindegänge der Fassungen und des Nippels ein herkömmliches Profil mit ebenen Flächen und einem eingeschlossenen Winkel von 60° aufweisen und die Flächen symmetrisch einen Winkel von 30° mit einer Linie einschließen, die durch den Scheitel eines Gewindeganges und senkrecht zur Achse des Nippels verläuft, dadurch gekennzeichnet, daß der Winkel des Konus von der Achse des Nippels zwischen 15° und 35° einschließlich beträgt.

2. Graphitelektrodenschaftverbindung nach Anspruch 1, dadurch gekennzeichnet, daß der Winkel zwischen 20° und 30° einschließlich beträgt.

3. Graphitelektrodenschaftverbindung nach Anspruch 1, dadurch gekennzeichnet, daß der Winkel im wesentlichen 20° beträgt.

4. Graphitelektrodenschaftverbindung nach Anspruch 1, dadurch gekennzeichnet, daß der Winkel im wesentlichen 30° beträgt.

5. Doppelseitiger Verbindungsnippel mit konischem Gewinde zum Verbinden zweier Graphitelektrodenabschnitte, deren gegenüberliegende Stirnseiten axiale, konisch verlaufende Gewindefassungen aufweisen, wobei die Länge jedes konischen Endes des Nippels kleiner ist als die axiale Tiefe der Gewindefassung im Elektrodenabschnitt, in den er einzupassen ist, so daß dieser so in die entsprechenden Elektrodenfassungen eingeschraubt werden kann, daß jede seiner Stirnseiten und der Boden der entsprechenden Fassung im Abstand voneinander verbleiben, wodurch die gegenüberliegenden Stirnflächen der Elektrodenabschnitte in Anlage miteinander gebracht werden, wobei die Gewinde der Fassungen und des Nippels komplementär ausgebildet sind und ein konventionelles Profil mit ebenen Flächen und einem eingeschlossenen Winkel von 60° aufweisen und die Flächen symmetrisch einen Winkel von 30° mit einer Linie bilden, die durch den Scheitel eines Gewindeganges senkrecht zur Achse des Nippels verläuft, dadurch gekennzeichnet, daß der Winkel des Konus von der Achse des Nippels zwischen 15° und 35° einschließlich beträgt.

6. Verbindungsnippel nach Anspruch 5, dadurch gekennzeichnet, daß der Winkel zwischen 20° und 30° einschließlich beträgt.

7. Verbindungsnippel nach Anspruch 5, dadurch gekennzeichnet, daß der Winkel im wesentlichen 20° beträgt.

8. Verbindungsnippel nach Anspruch 5, dadurch gekennzeichnet, daß der Winkel im wesentlichen 30° beträgt.

**Revendications**

1. Joint de colonne d'électrodes en graphite comprenant deux extrémités opposées de sections d'électrodes en graphite présentant chacune un alvéole extrême fileté, conique, axial, et une broche conique de liaison à double extrémité présentant un filetage conique complémentaire et vissée dans les alvéoles extrêmes opposés afin d'amener les faces extrêmes des sections d'électrodes en graphite en contact l'une avec l'autre, tout en laissant chaque face extrême de la broche et le fond de l'alvéole correspondant espacés l'un de l'autre, les filets des alvéoles et de la broche ayant un profil classique présentant des faces plates et un angle interne de 60°, les faces formant symétriquement un angle de 30° par rapport à une ligne passant par le sommet d'un filet perpendiculaire à l'axe central de la broche, caractérisé en ce que l'angle de la conicité par rapport à l'axe central de la broche est compris entre 15° et 35° inclus.

2. Joint de colonne d'électrodes en graphite selon la revendication 1, caractérisé en ce que ledit angle est compris entre 20° et 30° inclus.

3. Joint de colonne d'électrodes en graphite selon la revendication 1, caractérisé en ce que ledit angle est sensiblement de 20°.

4. Joint de colonne d'électrodes en graphite selon la revendication 1, caractérisé en ce que ledit angle est sensiblement de 30°.

5. Broche filetée de liaison à double extrémité conçue pour joindre deux sections d'électrodes en graphite dont des extrémités opposées présentent des alvéoles filetés coniques axiaux, la longueur de chaque extrémité conique de la broche étant inférieure à la profondeur axiale de l'alvéole conique de la section d'électrodes sur laquelle elle doit être montée de façon qu'elle puisse être vissée dans des alvéoles d'électrodes correspondants d'une manière laissant espacés l'un de l'autre chacune de ses extrémités et le fond de l'alvéole correspondant, et amenant ainsi des faces extrêmes opposées des sections d'électrodes en contact l'une avec l'autre, les filets des alvéoles et de la broche étant complémentaires et ayant un profil classique avec des faces plates et un angle interne de 60°, les faces formant symétriquement un angle de 30° part rapport à une ligne passant par le sommet d'un filet perpendiculaire à l'axe central de la broche, caractérisée en ce que l'angle de la conicité par rapport à l'axe central de la broche est compris entre 15° et 35° inclus.

6. Broche de liaison selon la revendication 5, caractérisée en ce que ledit angle est compris entre 20° et ·30° inclus.

7. Broche de liaison selon la revendication 5, caractérisée en ce que ledit angle est sensiblement de 20°.

8. Broche de liaison selon la revendication 5, caractérisée en ce que ledit angle est sensiblement de 30°.

8

FIG. 1

FIG. 4

FIG. 3

FIG. 2